# EUROPEAN PATENT SPECIFICATION

(11) **EP 0 750 062 B1**
(45) Date of publication and mention of the grant of the patent: **26.05.1999**
(21) Application number: 95118292.2
(22) Date of filing: 21.11.1995
(51) Int. Cl.: D04H 1/40

(54) **Disposable skin cleansing articles**
Wegwerfhautreinigungsgegenstände
Articles jetables pour nettoyage de la peau

(30) Priority: 23.06.1995 EP 95304447
(43) Date of publication of application: 27.12.1996
(73) Proprietor: THE PROCTER & GAMBLE COMPANY, Cincinnati, Ohio 45202 (US)
(72) Inventor: Malmbak, Marianne, D-65510 Idstein-Eschenhahn (DE); Moore, Katherine Louise Heinicke, D-61462 Königstein (DE)
(74) Representative: Canonici, Jean-Jacques

(56) References cited:
- EP-A- 0 423 619
- EP-A- 0 468 799
- DE-A- 3 932 032
- US-A- 4 679 278
- US-A- 5 240 764

## Description

### Technical Field

The present invention relates to dry disposable skin cleansing articles, such as dry facial cleansing articles.

### Background of the Invention

Skin cleansing articles, including disposable articles, are well known, and are available both as impregnated (wet) materials and as dry materials, reflecting two different uses and benefits.

The dry articles are typically imparting their cleaning effect by a rubbing action onto the skin allowing to take away dirt, dead skin cells, etc. from the skin surface and the skin pores.

Said dry articles can, and often are, used as carriers for cleansing products like lotions and milks, poored on to the articles by the user, immediately prior to application onto the skin; the rubbing action of said substrates remains however their major function, as it optimises the efficiency of the cleansing product used onto it; said dry articles are also used to remove such cleansing products, together with dirt and skin particles from the skin, by the rubbing action and absorption effect.

Dry articles which are known in the art/available to the consumer consist of three types: paper tissue, non woven cotton, or woven cloth, the first two being typically of a disposable nature.

The paper tissue articles suffer the drawback of lacking sufficient textile strength, to achieve a proper rubbing action; on the other hand, cloth woven materials exhibit a high textile strength, and do allow for a rubbing action on the skin, however said rubbing action is prone to causing skin irritation and damage.

Both paper tissue and woven cloth materials suffer the additional drawback of their relatively harsh feel against the skin.
Non woven cotton pads typically exhibit a soft feel to the skin and allow to some extend a rubbing action onto the skin to be cleansed; the rubbing action is however limited in its efficiency by the textile strength of the material which will tend to loose its structure relatively fast.

There is a need therefore, for a dry disposable skin cleansing article which is soft to the skin, strong enough to allow an efficient rubbing action, and such that the rubbing action does not result in skin irritation/damage.

It has now surprisingly been found that the use of non woven materials of a basis weight between 20 and 150 g/m² as substrates in disposable dry skin cleansing articles allows to fulfil the above needs.

Skin cleansing articles referred to wet wipes, are known as cleansing articles for babies or adult incontinents; such wipes, such as described in e.g. EPA 328355 can comprise a substrate made of non woven fibrous material, impregnated with a lotion; however such non woven materials have not been disclosed for use as substrates in dry skin cleansing articles.

### Summary of the invention

The present invention relates to dry, disposable skin cleansing articles such as facial cleansing articles, comprising a substrate having a major surface for rubbing on the skin, characterized in that said substrate is a non woven substrate, preferably hydroentangled having a basis weight of from 20 to 150 g/m²; said substrates can be further caracterized by their Coefficient of Friction; the Dynamic Coefficient of Friction in the Cross Direction is above 1.2 and the Static Coefficient of Friction in the Cross Direction is above 1.4 according to the method described hereinafter.

### Detailed Description of the Invention

The dry skin cleansing articles of the present invention find an application as cleansing/cleaning articles for the human skin, and preferably as facial cleansing articles; the articles herein comprise a substrate having major surface allowing a rubbing action onto the skin; the cleansing articles herein can be formed of several parts, e.g. layers made of distinct materials as long as or the part/layer having a major surface allowing the rubbing action onto the skin is constituted of the non woven substrate described herein.

The articles of the invention can also be constituted of said substrates, in such a sase, the articles of the invention will consist of a single, flexible, sheet of non woven material, said sheet being of different possible geometrical shape such as square, rectangular, circular, oval, or any combination of these, as well as of different sizes; such sheets can e.g. be of rectangular shape and have dimensions of 10 to 15 mm x 13 to 25 mm.

The substrates herein are non-woven;
One method of manufacturing non-woven substrates involves a process known as hydroentangling. In this, a web of fibres, for example a carded web, travels beneath at least one array of orifices, and preferably a plurality of from successive arrays, from which jets of water are emitted. Each array extends transversely with respect to the path of travel of the web, and provides a large number of closely spaced jets. These jets act like sharp needles, and entangle the fibres to form a substrate. This entanglement holds the fibres in a coherent substrate, without the need for adhesives or thermal bonding. In current equipment, the orifices typically have a diameter of from about 80 to about 180 micrometers, preferably about 90 to 150 micrometers, and there may typically be from about 800 to 1700 nozzles per metre of orifice array. The water is supplied to the orifice arrays at a pressure which generally increases stepwise from the first array, where it may be as little as 30 bar, to the last array, where it may be as much as about 250 bar. This stepwise increase is provided to allow for the fact that the fibres are progressively more and more difficult to move as entanglement proceeds. The total energy supplied to the web by the liquid jets from all the orifice arrays combined is 0.5 to 1.0 kWh/kg of fibre material.

Further general information about hydroentangling can be found, for example, in US-A-2862551 (Kalwaites), US-A-3025585 (Griswold), US-A-3485706 (Evans), US-A-5204158 (Phillips et al), US-A-5320900 (Oathout) and EP-A-0418493 (Fiberwet), the contents of which are incorporated herein by reference. Hydroentangling equipment suitable for use in carrying out the present invention is obtainable from ICBT Perfojet, Z.A. Pre-Millet, 38330 Mount Bonnot, France.

It should be mentioned that although hydroentangling is preferred as the method of producing the substrate, other methods known per se in the art can alternatively be used. For example, the water can be replaced by another liquid, or by a gas, for example air or steam. Alternatively, the fluid "needles" can be replaced by mechanical needles, in a process known as needlepunching. In this barbed needles, e.g. of steel, are punched through the web, hooking tufts of fibres across it and thereby bonding it in the needlepunched areas. The needles enter and leave the web while it is trapped between two plates, the web being pulled through the apparatus by draw rolls.

Another method which might be used is thermal bonding, in which the fibres are of thermoplastic material, or have an outer layer of thermoplastic material, and are bonded together in discrete spots by heat. This bonding can be achieved using a drum which has at least one heating element in the interior thereof, and which has an exterior surface carrying an embossed pattern with which the fibrous layer is pressed into contact. However, a substrate produced in this way is unlikely to be as soft as one produced by hydrogentangling, or needlepunching, and may have a substantially proportion of completely loose fibres.

Yet another method involves wet-laying a mixture of fibres and chemical binder, somewhat in the manner employed, for example, in paper making.

Needlepunching, thermal bonding, and wet-laying are all well known per se and will therefore not be described in detail below. Hydroentangling is also well known per se, but is described further below, because it is the preferred method and for the purpose of mentioning a number of modifications to the hydrogentangling procedure as it is usually practised.

The preferred hydroentangled substrate herein should be hydroentangled through their whole thickness, so as to achieve sufficient textile strength; substrates wherein only the surface thereof has been hydroentangled are not within the scope of the present invention.

The substrates herein can further be characterized by their coefficient of friction; the present substrates indeed exert a friction on the skin, which is optimised to the extent that it can achieve an efficient cleansing effect without needing to rub for an extended amount of time, which could cause irritation to the skin; the substrates herein have a coefficient of friction, mesured in the Cross Direction and according to the method described herein below, which is higher than woven cloth materials.

The substrates herein have a Dynamic Coefficient of Friction above 1,2, preferably from 1,3 to 1,6 and a Static Coefficient of Friction above 1,4 preferably from 1,6 to 2,0.

The said Coefficient of Friction are determined according to the following method:

### Description of the Friction Test

### SCOPE

This method covers the determination of the coefficient of sliding (kinetic) friction of substrates when sliding over a metal plate with a special coating.

### APPARATUS

- Friction Sled: A metal block of 25 mm x 75 mm. Determine actual sled weight to the nearest 0.5 or less grams.
- Friction Platform: A specially coated platform. (Coating: Plasma Coating 314, Supplier: Smaltiviva, Monte Marenzo, Italy).
- Tensile Tester: Zwick 1445
Set instrument to a crosshead speed to 127 mm/min.
Instrument prepared according to manufacturer's instructions to analyse the static or dynamic CoF.

### SAMPLE PREPARATION

Cover the Friction Sled with the substrate to be tested.

### PROCEDURE

The sled with the sample is placed on the Friction platform, and the string of the Friction sled is attached to the Tensile tester. The string needs to be just taut but not tight. The load at this point has to be 0 N. Turn on the Tensile tester to start pulling the sled over the test plate.
- Static Coefficient of Friction:: based on the force needed to get the slide to move
force measured at peak (N)
force of sled (N)
- Dynamic Coefficient of Friction:: based on the force needed to keep the slide moving
average force measured after peak (N)
force of sled (N)

The materials herein have a textile strength of up to 180N in the machine direction and up to 61N in the cross direction.

Textile strength in both the MD an CD directions is determined from 1" wide strips cut to 15 cm in length and fixed without slack but without tension on an Instron tester within jaws set at 10 cm distance. The energy input from the Instron machine to the sample is then plotted over time with the y axis indicating the force applied to the sample in Newtons and the x axis indicating the % elongation of the sample at the indicated elongation rate.

The tensile strength number is defined as the peak force from this force over elongation curve.

Other characteristics of the substrate herein include caliper, preferably in the range of from 0.4 to 2.00 mm, more preferably from 0.4 to 0.95 mm, measures using standard EDANA non-woven indensity methodology, reference method of # 30-4-89.

The substrates herein are preferably stretchable, and accordingly preferably have a % elongation in the rangeof 10 to 50 in one direction, and from 50 to 210 in the other direction.

Various fibre compositions can be used to produce the substrates herein. Examples of the fibre compositions which can be used include mixtures of a hydrophilic (e.g. cotton, viscose, pulp), and hydrophobic (e.g. polyethylene terephthalate or polypropylene) fibre materials, or purely hydrophilic or purely hydrophobic materials.

In one embodiment of the present invention, the substrate is a relatively low strength one, as described in copertime Europeen Patent Application No. 95304447.6.

Such substrates are characterised by having a low strength in at least one direction and comprise at least a proportion of long fibres which are capable of protruding from the said major surface as a result of said rubbing whilst remaining attached to the substrate.

Preferably such substrates, as made, have a toughness of less than 0.6N/m in at least one direction, more preferably not more than 0.5 N/m. The toughness is preferably less than 1.2 N/m in each of two mutually perpendicular directions. The toughness is obtained also from the same test and results graph. as described above under terrible strength. Toughness is defined as the area under the entire curve indicated in Newtons by % elongation. The tensile strength is preferably not more than 45 N. After rubbing is applied, in a manner described below the toughness is preferably reduced by at least 15%, and is preferably less than 0.5 N/m, in at least one direction, and less than 0.6 in each of two mutually perpendicular directions. The tensile strength after rubbing is preferably not more than 10N in at least one direction, and not more than 30N in each of two mutually perpendicular directions.

In the present embodiment is a low strength necessary in order to allow significant quantities of surface fibres to become separated from the surface plane of the substrate when the substrate is subjected to the friction which results from rubbing on the skin or other surface to be cleaned. The low strength may be in MD or CD or both.

Furthermore at least a certain proportion of the fibres, preferably at least 20%, more preferably at least 40%, still more preferably at least 60%, and yet more preferably at least 80%, are sufficiently long that even though they extend from the surface plane of the substrate as a result of the friction produced by rubbing, they nevertheless remain attached to the body of the substrate. In one preferred form, substantially all the fibres are long fibres. Such fibres can either remain attached at one end, with the other end extending from the substrate surface, or they can remain attached at both ends, but have a central portion extending from the substrate surface. The fibres referred to herein as "long" have a length of at least 2cm, normally from 2 to 6cm, and more preferably at least 3cm, normally from 3 to 5cm. The low-strength substrates such as described above can be made according to hydroentangling method such as described above, but with reduced energy input.

Texturing of the major surface of the substrates herein can be desirable.

The texture is preferably in the form of a grid of depressions and ridges, of which not more 80%, preferably not more than 50%, of the depressions form apertures open to the opposite face of the substrate.

### Example

A non woven hydroentangled substrate available from SUOMINEN, under reference 310062, having a basis weight of 62 g/m², a Dynamic Coefficient of Friction of 1.37 and a Static Coefficient of Friction of 1.68, according to the above described method, a tensile strength of 41N in MD and 9N in CD was used for facial cleansing (rectangular shape 13 x 20 mm);
it allowed to obtain excellent cleansing results while not resulting in any skin irritation.

## Claims

1. A dry, disposable, skin cleansing article, comprising a substrate having a major surface for rubbing on the skin, characterized in that said substrate is a non woven substrate having a basis weight of from 20 to 150 g/m².

2. An article according to claim 1 wherein said substrate is hydroentangled.

3. An article according to claim 2 which said substrate is hydroentangled throughout its whole thickness.

4. An article according to claims 1 - 3 which is a facial cleansing article.

5. An article according to claims 1 - 4 which consists of said substrate.

6. An article according to claims 1-5 wherein said substrate has a basis weight of 25 to 120 g/m².

7. An article according to claims 1 - 6 wherein said substrate has a Dynamic Coefficient of Friction in the Cross Direction above 1.2 and a Static Coefficient of Friction in the Cross Direction above 1.4, as measured according to the method described herein.

8. An article according to previous claims wherein said Dynamic Coefficient of Friction is in the sample of from 1.3 to 1.6 and said Static Coefficient of Friction is in the sample of from 1.6 to 2.

9. An article according to claims 1 - 8 wherein said substrate has a textile strength of up to 180N in the Machine Direction and up to 61N in the Cross Direction.

10. An article according to claims 1 - 9 wherein said substrate is made of a mixture of hydrophilic and hydrophobic material, preferably selected from, respectively, viscose, cotton, pulp, polypropylene and polyethylene-terephthalate.

11. An article according to claims 1 - 10 wherein said substrate has a low strength in at least one direction, and comprises at least a proportion of long fibres which are capable of protruding from the said major surface as a result of said rubbing whilst remaining attached to the substrate.

12. An article according to claim 11 wherein the textile strength of said substrate is of no more than 45 N in any direction, and said fibres have a length of at least 2 cm, preferably 3 to 5 cm.

13. A substrate according to claims 1 - 12, wherein said major surface is textured.

14. A substrate according to claim 13, wherein said texture is in the form of a grid of depressions and ridges, of which not more 80%, preferably not more than 50%, of the depressions form apertures open to the opposite face of the substrate.

15. The use of a non woven substrate having a basis of weight of from 20 to 150 g/m², in a dry, disposable, skin cleansing article.

## Patentansprüche

1. Ein trockener, wegwerfbarer, hautreinigender Artikel, welcher ein Substrat umfaßt, welches eine Hauptoberfläche zum Reiben an der Haut aufweist, dadurch gekennzeichnet, daß das genannte Substrat ein Faservlies-Substrat mit einem Flächengewicht von 20 bis 150 g/m² ist.

2. Ein Artikel nach Anspruch 1, bei welchem das genannte Substrat hydroverfilzt ist.

3. Ein Artikel nach Anspruch 2, bei welchem das genannte Substrat über seine gesamte Dicke hydroverfilzt ist.

4. Ein Artikel nach den Anspüchen 1 bis 3, welcher ein kosmetischer Reinigungsartikel ist.

5. Ein Artikel nach den Ansprüchen 1 bis 4, welcher aus dem genannten Substrat besteht.

6. Ein Artikel nach den Ansprüchen 1 bis 5, bei welchem das genannte Substrat ein Flächengewicht von 25 bis 120 g/m² aufweist.

7. Ein Artikel nach den Ansprüchen 1 bis 6, bei welchem das genannte Substrat in der Querrichtung einen dynamischen Reibungskoeffizienten oberhalb 1,2 und in der Querrichtung einen statischen Reibungskoeffizienten oberhalb 1,4, gemessen gemäß dem hierin beschriebenen Verfahren, aufweist.

8. Ein Artikel nach den vorhergehenden Ansprüchen, bei welchem der genannte dynamische Reibungskoeffizient im Probenstück von 1,3 bis 1,6 und der genannte statische Reibungskoeffizient im Probenstück von 1,6 bis 2 ist.

9. Ein Artikel nach den Ansprüchen 1 bis 8, bei welchem das genannte Substrat eine Gewebefestigkeit bis zu 180 N in der Maschinenrichtung und bis zu 61 N quer zur Maschinenrichtung aufweist.

10. Ein Artikel nach den Ansprüchen 1 bis 9, bei welchem das genannte Substrat aus einer Mischung aus hydrophilem und hydrophobem Material, welches vorzugsweise aus Viskose bzw. Baumwolle, Zellstoff, Polypropylen und Polyethylen-Terephthalat ausgewählt ist, hergestellt ist.

11. Ein Artikel nach den Ansprüchen 1 bis 10, bei welchem das genannte Substrat in mindestens einer Richtung eine geringe Festigkeit aufweist und mindestens einen Anteil von langen Fasern umfaßt, welche imstande sind, um als ein Ergebnis des genannten Reibens von der genannten Hauptoberfläche vorzukragen, während sie noch am Substrat fixiert verbleiben.

12. Ein Artikel nach Anspruch 11, bei welchem die genannte Gewebefestigkeit des genannten Substrats nicht mehr als 45 N in irgendeiner Richtung ist und die genannten Fasern eine Länge von mindestens 2 cm, vorzugsweise 3 bis 5 cm, aufweisen.

13. Ein Substrat nach den Ansprüchen 1 bis 12, bei welchem die genannte Hauptoberfläche texturiert ist.

14. Ein Substrat nach Anspruch 13, bei welchem die genannte Textur in der Form eines Gitters von Einprägungen und Graten ist, wovon nicht mehr als 80 %, vorzugsweise nicht mehr als 50 % der Einprägungen Öffnungen bilden, welche zur gegenüberliegenden Seite des Substrats offen sind.

15. Die Verwendung eines Faservlies-Substrats mit einem Flächengewicht von 20 bis 150 g/m² in einem trockenen, wegwerfbaren Hautreinigungsartikel.

## Revendications

1. Article pour le nettoyage de la peau, sec, jetable, comprenant un substrat présentant une surface principale en vue d'un frottement sur la peau, caractérisé en ce que ledit substrat est un substrat non tissé qui a un grammage compris entre 20 et 150 g/m².

2. Article selon la revendication 1, dans lequel ledit substrat est hydro-enchevêtré.

3. Article selon la revendication 2, dans lequel ledit substrat est hydro-enchevêtré sur toute son épaisseur.

4. Article selon les revendications 1 à 3, qui est un article pour le nettoyage facial.

5. Article selon les revendications 1 à 4, qui est composé dudit substrat.

6. Article selon les revendications 1 à 5, dans lequel ledit substrat a un grammage compris entre 25 et 120 g/m².

7. Article selon les revendications 1 à 6, dans lequel ledit substrat a un coefficient dynamique de frottement dans la direction transversale supérieur à 1,2 et un coefficient statique de frottement dans la direction transversale supérieur à 1,4, lorsqu'ils sont mesurés selon le procédé décrit ici.

8. Article selon les revendications précédentes, dans lequel ledit coefficient dynamique de frottement est compris, dans l'échantillon, entre 1,3 et 1,6, et ledit coefficient statique de frottement est compris, dans ledit échantillon, entre 1,6 et 2.

9. Article selon les revendications 1 à 8, dans lequel ledit substrat présente une résistance textile allant jusqu'à 180 N dans la direction longitudinale de la machine et jusqu'à 61 N dans la direction transversale.

10. Article selon les revendications 1 à 9, dans lequel ledit substrat est fait d'un mélange de matériau hydrophile et hydrophobe, de préférence choisi respectivement parmi la viscose, le coton, la pâte, le polypropylène et le téréphtalate de polyéthylène.

11. Article selon les revendications 1 à 10, dans lequel ledit substrat présente une faible résistance au moins dans une direction, et comprend au moins une certaine proportion de fibres longues qui sont capables de faire saillie de ladite surface principale en réponse audit frottement, tout en restant fixées au substrat.

12. Article selon la revendication 11, dans lequel la résistance textile dudit substrat n'est pas supérieure à 45 N dans n'importe quelle direction, et lesdites fibres ont une longueur d'au moins 2 cm, de préférence comprise entre 3 et 5 cm.

13. Substrat selon les revendications 1 à 12, dans lequel ladite surface principale est texturée.

14. Substrat selon la revendication 13, dans lequel ladite texture se présente sous la forme d'une grille d'évidements et d'arêtes, dont pas plus de 80%, de préférence pas plus de 50%, des évidements forment des orifices ouverts vers la face opposée du substrat.

15. Utilisation d'un substrat non tissé, qui a un grammage compris entre 20 et 150 g/m², dans un article pour le nettoyage de la peau, sec, jetable.
